# EUROPÄISCHE PATENTANMELDUNG

(11) **EP 2 327 500 A1**
(43) Veröffentlichungstag der Anmeldung: **01.06.2011**
(21) Anmeldenummer: 10013764.5
(22) Anmeldetag: 19.10.2010
(51) Int. Cl.: B23K 11/30

(54) **Abzieheinrichtung zum Abziehen von Elektrodenkappen von Schweisselektroden**

(30) Priorität: 25.11.2009 DE 102009054425
(71) Anmelder: Schweisstechnik Bräuer GmbH, 09488 Thermalbad Wiesenbad OT Schönfeld (DE)
(72) Erfinder: Bräuer, Andreas, 09456 Annaberg-Buchholz (DE)
(74) Vertreter: Köhler, Tobias

(57) **Zusammenfassung**

Die Erfindung betrifft eine Abzieheinrichtung zum Abziehen von Elektrodenkappen von Schweißelektroden, insbesondere für Schweißzangen von Schweißrobotern, aufweisend einen Werkzeugträger mit mindestens einem um eine Werkzeugdrehachse drehbar gelagerten Abziehwerkzeuges mit Klemmmitteln zum Fixieren der abzuziehenden Elektrodenkappen und einen Antrieb für die Drehbewegung dieses Abziehwerkzeugs, gekennzeichnet durch Absaugmittel zum Absaugen der durch Lösen der Klemmmittel freiwerdenden Elektrodenkappen sowie des aus den offenen Enden der Elektrodenschäfte austretenden Kühlmediums, bestehend aus einem Anschlussteil (5) welches an der der Zuführrichtung der Elektrodenkappe angewandten Seite (6) so angeordnet ist, dass das Austreten von abgezogenen Elektrodenkappen sowie des nachlaufenden Kühlmediums verhindert wird und einem Absaugkanal (7), durch welchen die abgezogenen Elektrodenkappen und das nachlaufende Kühlmedium einem Sammelbehälter (8) zuführt und einem mit dem Absaugkanal in Verbindung stehendem Unterdruckerzeugungsmittel (9).

## Beschreibung

Die Erfindung betrifft eine Abzieheinrichtung zum Abziehen von Elektrodenkappen von Schweißelektroden, insbesondere für Schweißzangen von Schweißrobotern

Zum Verbinden von Metallblechen und Bändern wird häufig das Punkt-Schweißen angewandt.
Insbesondere in der Automobilindustrie wird dieses Verfahren in der Karosserieherstellung in Fertigungsstrassen eingesetzt.

Hier werden üblicherweise eine Vielzahl von Schweißrobotern eingesetzt, um die Karosserleblechteile durch Punkt-Schweißen mit einander zu verbinden.
Die Schweißroboter werden mit Schweißzangen ausgestattet, welche Paare von Schweißzangen aufweisen, deren Zangenbacken mit je einer Punkt-Schweiß-Elektrode , den sogenannten Elektrodenkappen, ausgerüstet sind.

Diese Schweißzangen werden an die miteinander zu verschweißenden positionierten Blechen herangeführt. Die genaue Positionierung der Schweißzange zu den zu verschweißenden Blechen sowie die Anordnung der Bleche zueinander erfolgt heutzutage automatisiert und computergestützt.
In solch einer automatisierten Fertigungsstraße erfolgen die Schweißvorgänge in möglichst schneller Taktung und unterbrechungsfrei ab.

Hierdurch unterliegen insbesondere die Elektrodenkappen einem hohen Verschleiß, da die Kontaktflächen der Elektrodenkappen in Eingriff mit den jeweils zu verschweißenden Karosserieblechteilen treten. Dabei fließt Strom zwischen den Elektroden durch die zu verscheißenden und aneinander anliegenden Karosserieblechteile. Dabei tritt eine Veränderung an den Kontaktflächen der Elektrodenkappen an deren Schweißbereichen auf.
Häufig bilden sich am Rand der Kontaktflächen Abbrandwülste, welche durch eine Vergrößerung der Kontaktfläche eine Veränderung der Schweißbedingungen bewirken.
Um dieser Veränderung nicht durch ein unökonomisches Nachführen der Stromstärke begegnen zu müssen, werden die Elektrodenkappen regelmäßig und in Abhängigkeit ihrer Belastung und daraus resultierender Abnutzung durch Fräsen nachbearbeitet.

Dazu werden Fräseinrichtungen so angeordnet, dass die Schweißroboter diese mit ihren Schweißzangen erreichen können und die Elektrodenkappen in Eingriff mit der jeweils installierten Fräseinrichtung gebracht werden.
Diese Elektrodenkappenfräseinrichtungen werden regelmäßig gebildet aus einem Werkzeugträger mit mindestens einem darin um eine Werkzeugdrehachse drehbar gelagerten Fräswerkzeug und einem Antrieb für dieses Fräswerkzeug.

Häufig werden zusammenwirkende Elektroden einer Schweißzange in gleichem oder ähnlichem Maße verschleißen, so dass diese regelmäßig und gleichzeitig durch Fräsen nachbearbeitet werden müssen.

Nach einer Anzahl durchgeführter Nachbearbeitungen ist ein Materialabtrag von der Elektrodenkappe in solch einem Maße erfolgt, dass diese ausgetauscht werden müssen.
Dazu werden die verschlissenen Elektrodenkappen von den Schweißelektrodenschäften abgezogen.

Beim Abziehen der Elektrodenkappen von den Schweißelektrodenschäften werden die Elektrodenkappen an ihren zylindrischen Mantelflächen mittels Klemmbacken an ihrer Mantelfläche festgeklemmt, Dann wird die Elektrodenkappe um ihre Achse bzw. die des verdrehsicher gehaltenen Schweißelektrodenschaftes gedreht und in dessen Achsrichtung von dem Schweißelektrodenschaft abgezogen.

Hierzu sind Handabzieher bekannt, welche jedoch in automatisierten Fertigungsstrassen wegen der Gefährdung der Arbeitskräfte nicht einzusetzen sind.

Vorrichtungen zu Abziehen von Elektrodenkappen sind beispielsweise aus der DE20209401 bekannt.
Diese beschreibt eine Vorrichtung zum Abziehen von Elektrodenkappen, bei der die Elektrodenkappe auf einem Elektrodenschaft mit geringem Abstand zu einem Anlaufbund des Elektrodenschaftes sitzt. Dabei entsteht zwischen dem Anlaufbund und dem anlaufbundseitigen Ende der Elektrodenkappe ein umlaufender, nutenförmiger Freiraum in welchen tangential in Richtung der Breite des Freiraumes dicker werdenden Keil eingreift.

Aus der DE8808586 ist eine Vorrichtung bekannt, welche mittels einer Hebelkonstruktion die Elektrodenkappen von den Elektrodenkappenschäften abgezogen werden.

Auch bekannt sind Abzieheinrichtungen, welche in einem Werkzeugträger angeordnet sind. Diese Abzieheinrichtungen weisen ein um eine Werkzeugdrehachse drehbar gelagertes Abziehwerkzeug und einen Antrieb für dieses Abziehwerkzeug auf. Die Elektrodenkappen werden von in dem Abziehwerkzeug angeordneten Klemmbacken fixiert. Dann wird die Elektrodenkappe um ihre Achse bzw. die des verdrehsicher gehaltenen Schweißelektrodenschaftes gedreht und in dessen Achsrichtung von dem Schweißelektrodenschaft abgezogen.

Die DE OS 3427366 beschreibt eine Vorrichtung, welche vorschlägt, die Elektrodenkappen mit zweier Dreh-Greif- Zangen abzuziehen und diese dann in einen Sammelbehälter fallen zu lassen.

Eine weitere bekannte Lösung besteht darin, dass nicht die Elektrodenkappe vom Elektrodenschaft gezogen wird, sondern der Elektrodenschaft durch Öffnen der Schweißzange aus der rotierenden Kappe gezogen wird.

Bei allen bekannten Abziehvorrichtungen werden die Elektrodenkappen bei Lösen der Klemmbacken die verschlissenen Elektrodenkappen aus der Abzieheinrichtung fallen. Um diese verschlissenen Elektrodenkappen aufzufangen werden üblicherweise Auffangbehälter unter den Abzieheinrichtungen angeordnet.
Nachteilig ist hierbei insbesondere, dass die Prozesssicherheit des Schweißens sowie die des Fräsens und Abziehens der
Elektrodenkappen dadurch gefährdet wird, dass einzelne Kappen nicht in die Auffangbehälter fallen, sondern eventuell in die Vorrichtungen gelangen und diese blockieren beziehungsweise beschädigen können.
Auch ist es möglich, dass die verschlissenen Elektrodenkappen auf den Boden fallen und dort Gefahren für das Personal entstehen können.

Ein weiterer gravierender Nachteil der bekannten Elektrodenabzieheinrichtung besteht darin, dass die Elektrodenschäfte der Schweißzangen nach dem Abziehen der Elektrodenkappen an ihren Enden offen sind.
Während des Betriebes werden die Elektrodenkappen durch in den Schweißzangen durch die Elektrodenschäfte zu den Elektrodenkappen geführte Medien, vorzugsweise Wasser, gekühlt,
Hierbei wird durch eine Öffnung an der Elektrodenkappe zugewandten Seite des Elektrodenschaftes das Kühlmedium in die Kappe eingeführt und durch eine weitere Öffnung an der Elektrodenkappe zugewandten Seite des Elektrodenschaftes dieses Kühlmedium wieder abgesaugt.
Wird die Elektrodenkappe abgezogen, läuft trotz Abschalten der Pumpen für das Kühlmedium eine Restmenge des Kühlmediums aus dem Elektrodenschaft. Dieses auslaufende Kühlmittel läuft regelmäßig unkontrolliert über die Abziehvorrichtung und damit auch über angeordnete Steuereinheiten und eventuell auf den Boden, was wiederum Risken hinsichtlich Prozesssicherheit beziehungsweise für die Bediener mit sich bringt.

Der Erfindung liegt die Aufgabe zugrunde, eine Abzieheinrichtung der vorstehenden Art so auszugestalten, dass die Schwierigkeiten bisher bekannter Lösungen möglichst vermieden werden und insbesondere zu erreichen, dass die Prozesssicherheit gewährleistet wird.

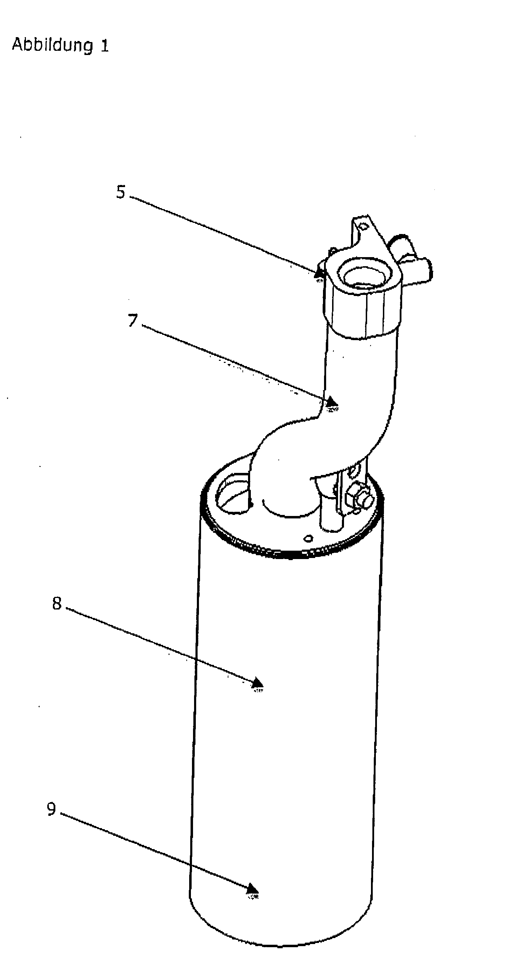

Erfindungsgemäß wird diese Aufgabe durch eine Vorrichtung gemäß der Patentansprüche 1 bis 5 gelöst, nachfolgend soll dieses System anhand der Abbildungen 1 bis 3 und dem nachfolgenden Ausführungsbeispiel näher erläutert werden.

Dabei zeigt Abbildung 1 die gesamte Vorrichtung in freigestellter Darstellung. Die Abbildungen 2 und 3 zeigen die Absaugmittel in unterschiedlicher Kombination mit Abzieheinrichtungen bzw. Fräseinrichtung und Abzieheinrichtungen und unterschiedlichen Montagerichtungen, welche durch die erfindungsgemäße Lösung ermöglicht werden.

Die erfindungsgemäße Abzieheinrichtung zum Abziehen von Elektrodenkappen von Schweißelektroden an Schweißzangen durch Herausziehen des Elektrodenschaftes aus der Elektrodenkappe besteht aus einem Werkzeugträger 1 mit mindestens einem um eine Werkzeugdrehachse drehbar gelagerten Abziehwerkzeuges 2 mit Klemmmitteln 3 zum Fixieren der abzuziehenden Elektrodenkappen und einen Antrieb 4 für die Drehbewegung dieses Abziehwerkzeugs sowie Absaugmittel zum Absaugen der durch Lösen der Klemmmittel 3 freiwerdenden Elektrodenkappen sowie des aus den offenen Enden der Elektrodenschäfte austretenden Kühlmediums, bestehend aus einem Anschlussteil 5 welches an der der Zuführrichtung der Elektrodenkappe angewandten Seite so angeordnet ist, dass das Austreten von abgezogenen Elektrodenkappen sowie des nachlaufenden Kühlmediums verhindert wird und einem Absaugkanal 7, durch welchen die abgezogenen Elektrodenkappen, welche hier nicht dargestellt sind, und das nachlaufende Kühlmedium einem Sammelbehälter 8 zuführt und einem mit dem Absaugkanal 7 in Verbindung stehendem Unterdruckerzeugungsmittel 9.
Durch die Absaugung der Elektrodenkappen und des Kühlmediums ist sichergestellt, dass diese in geeigneter Art und Weise von der Abzieheinrichtung entfernt werden und eine Behinderung des Fertigungsprozesses vermieden wird.

Die Abbildungen zeigen eine beispielhafte Anordnung des Unterdruckerzeugungsmittels 9 integriert im unteren Teil des Sammelbehälters 8.

Es ist jedoch auch möglich, das Unterdruckerzeugungsmittels 9 extern anzuordnen. Bei dieser Lösung wird durch Verwendung geeigneter Mittel, wie beispielsweise Druckschläuchen, eine Beaufschlagung der Absaugeinrichtung mit Unterdruck erfolgen. Vorzugsweise wird dies so ausgeführt, dass der Unterduck über den Sammelbehälter 8 dem System zugeführt wird.

Die Verbindung des Anschlussteiles 5 mit dem Werkzeugträger 1 kann beispielsweise mittel eines Flansches erfolgen, auf welchem der Absaugkanal 7 angeordnet wird. Auf diesen Flansch wird das Verbindungsteil 5 aufgesetzt und festgeklemmt. Üblicherweise werden hier bekannte Dichtungen eingesetzt um, wein Austreten der nachlaufenden Flüssigkeit aus dem Elektrodenschaft zu verhindern.
Eine weitere Variante der Verbindung des Verbindungsteils 5 mit dem Werkzeugträger 1 besteht darin, dass das Verbindungsteil 5 direkt mit dem Werkzeugträger 1 so verschraubt wird, dass die abgezogenen Elektrodenkappen ohne Behinderung in den Absaugkanal 7 gelangen.

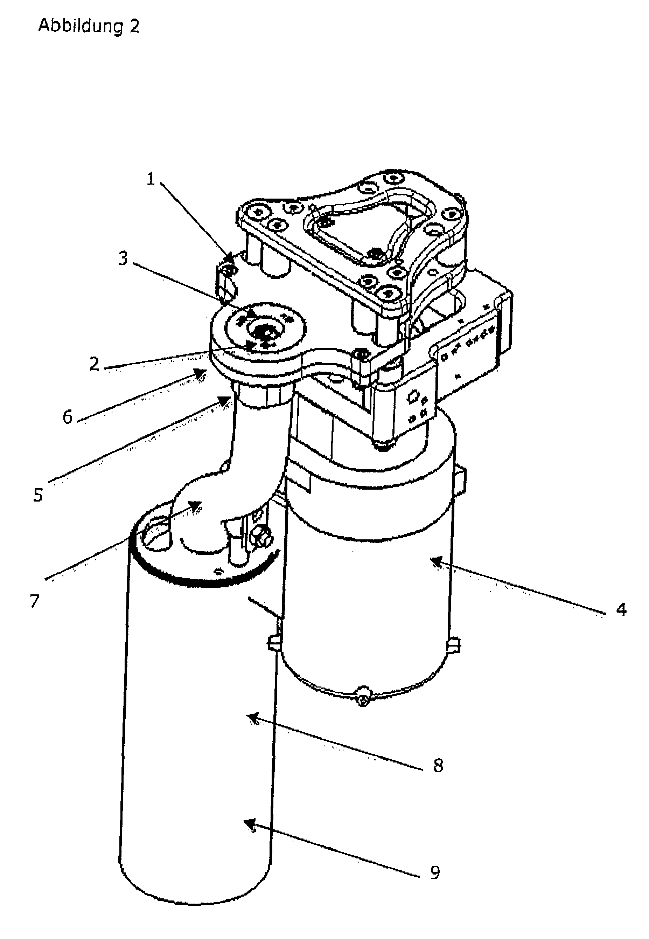

Wird festgestellt, dass die Elektrodenkappen verschlissen und nicht mehr nachzufräsen sind, wird die Schweißzange mit den beiden sich gegenüberangeordneten Elektrodenkappen so zu der Abziehvorrichtung geführt, dass eine Elektrodenkappe in die Abziehvorrichtung, gemäß Abbildung 2 von Oben, eingeführt und mittels der Klemmmittel 3 fixiert wird. Durch Drehung des Abziehwerkzeuges 2 gegen die Lösungsrichtung des in die Schweißzange eingeschraubten Elektrodenschaftes und gleichzeitigem herausziehen dieses Schaftes aus der fixierten Elektrodenkappe wird diese vom Schaft abgezogen. Nach Lösen der Klemmmittel 3 wird die Elektrodenkappe frei und aus den Kühlmittelöffnungen des Elektrodenschaftes läuft das sich noch in dem Elektrodenschaft befindliche Kühlmittel nach. Die freigewordene Elektrodenkappe und das nachlaufende Restkühlmittel aus dem Elektrodenschaft wird mittels des durch das Unterdruckerzeugungsmittel 9 erzeugten Unterdruck durch den Absaugkanal 7 in den Sammelbehälter 8 transportiert und in diesem aufgefangen.

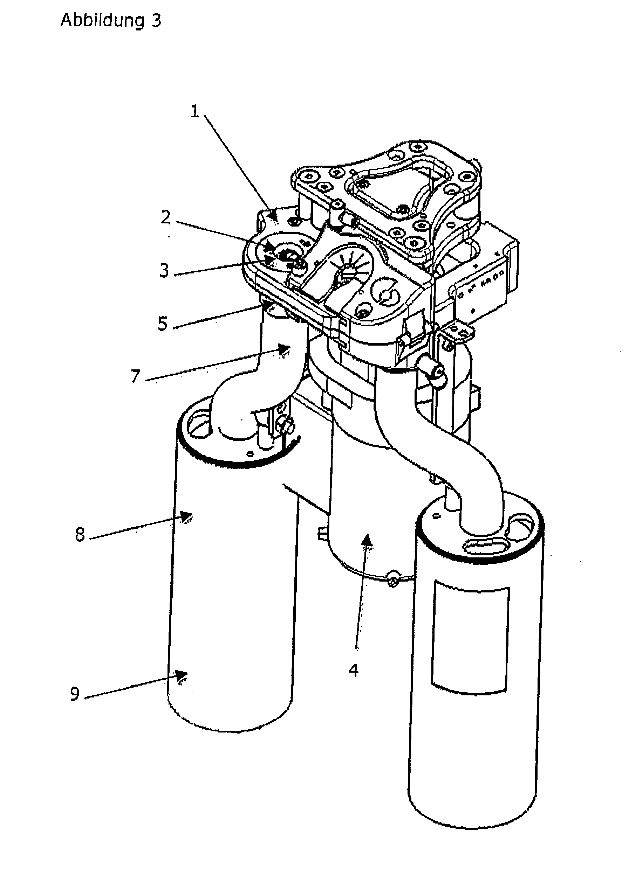

In einigen Fällen ist es bei der Anwendung der Kappenfräser notwendig, den Werkzeugträger 1 in von horizontaler Lage abweichender Lage einzusetzen. Die ist mit der erfindungsgemäßen Lösung möglich,
In Abhängigkeit der Dimensionierung des Unterdruckerzeugungsmittels 9 ist die Möglichkeit gegeben, den Werkzeugträger 1 die Elektrodenkappen wie auch das nachlaufende Kühlmittel in jede andere Richtung als vertikal abzusaugen.
Dies zeigt Abbildung 3, gemäß welcher die Absaugung nach oben erfolgt.
Durch die erfindungsgemäße Ausgestaltung der Lösung ist es möglich, die gesamte Vorrichtung in ihrer Lage so anzuordnen, dass ein möglichst schneller und einfacher Zugriff der Schweißzange erfolgen kann. Somit ist es möglich, den eigentlichen Prozess des Schweißens technologisch primär zu betrachten und die Hilfsprozesse wie Elektrodenkappenfräsen und Elektrodenkappenwechel dem Hauptprozess unterzuordnen.

In einer besonderen Ausgestaltung der erfindungsgemäßen Lösung wird das Unterdruck erzeugende Mittel nichtelektrisch betrieben. Dadurch können eventuelle Probleme hinsichtlich des abgesaugten Kühlmittels zu umgehen.

Auch ist es sinnvoll, den Sammelbehälter 8 mit einem Sichtfenster auszugestalten, wodurch sich der Füllgrad dieses Sammelbehälters 8 einfach kontrollieren lässt.

Um den Vorteil der Absaugung des nachlaufenden Kühlmittels weiter zu nutzen kann der Sammelbehälter 9 so gestaltet sein, dass das Kühlmedium nicht austreten kann.

Auch ist es eine weitere sinnvolle Ausgestaltung der erfindungsgemäßen Lösung, dass der Sammelbehälter 8 mittels eines Schnellverschlusses vom Absaugkanal 7 und dem Unterdruckerzeugungsmittel 9 lösbar ist.

Vorteilhafterweise ist die erfindungsgemäße Vorrichtung in ihrer Gesamtheit so gestaltet, dass sie in ihrer Lage variabel an einem Werkzeugträger 1 zu montieren ist.

## Patentansprüche

1. Abzieheinrichtung zum Abziehen von Elektrodenkappen von Schweißelektroden an Schweißzangen von Schweißrobotern durch Herausziehen des Elektrodenschaftes aus der Elektrodenkappe, aufweisend einen Werkzeugträger mit mindestens einem um eine Werkzeugdrehachse drehbar gelagerten Abziehwerkzeuges mit Klemmmitteln zum Fixieren der abzuziehenden Elektrodenkappen und einen Antrieb für die Drehbewegung dieses Abziehwerkzeugs,
**gekennzeichnet durch**
Absaugmittel zum Absaugen der **durch** Lösen der Klemmmittel freiwerdenden Elektrodenkappen sowie des aus den offenen Enden der Elektrodenschäfte austretenden Kühlmediums, bestehend aus
einem Anschlussteil (5) welches an der der Zuführrichtung der Elektrodenkappe angewandten Seite (6) angeordnet ist, und
einem daran angeordneten Absaugkanal (7), **durch** welchen die abgezogenen Elektrodenkappen und das nachlaufende Kühlmedium einem Sammelbehälter (8) zuführt und einem mit dem Absaugkanal in Verbindung stehendem Unterdruckerzeugungsmittel (9).

2. Vorrichtung nach Anspruch 1, **dadurch gekennzeichnet, dass** der Sammelbehälter (8) ein Sichtfenster (10) aufweist.

3. Vorrichtung nach Anspruch 1, **dadurch gekennzeichnet, dass** der Sammelbehälter (8) so flüssigkeitsdicht gestaltet ist, dass das Kühlmedium nicht austreten kann.

4. Vorrichtung nach Anspruch 1, **dadurch gekennzeichnet, dass** der Sammelbehälter (8) mittels eines Schnellverschlusses vom Absaugkanal und dem Unterdruckerzeugungsmittel lösbar ist.
